(19) Europäisches Patentamt
European Patent Office
Office européen des brevets

(11) **EP 1 596 103 B1**

(12) **EUROPÄISCHE PATENTSCHRIFT**

(45) Veröffentlichungstag und Bekanntmachung des Hinweises auf die Patenterteilung:
**20.02.2008 Patentblatt 2008/08**

(51) Int Cl.:
*F16H 61/28* *(2006.01)*          *F16H 63/30* *(2006.01)*

(21) Anmeldenummer: **04101420.0**

(22) Anmeldetag: **06.04.2004**

(54) **Stelleinheit zur automatisierten Betätigung eines Schaltgetriebes**

Actuator for automatic operation of a gearbox

Actionneur pour boîte de vitesse automatisée

(84) Benannte Vertragsstaaten:
**DE FR GB**

(43) Veröffentlichungstag der Anmeldung:
**16.11.2005 Patentblatt 2005/46**

(73) Patentinhaber: **Getrag Ford Transmissions GmbH**
**50725 Köln (DE)**

(72) Erfinder:
• **Doelling, Matthias**
**51429, Bergisch-Gladbach (DE)**
• **Hoersken, Christian**
**47228, Duisburg (DE)**

(74) Vertreter: **Drömer, Hans-Carsten et al**
**Ford-Werke Aktiengesellschaft,**
**Patentabteilung NH/DRP,**
**Henry-Ford-Strasse 1**
**50725 Köln (DE)**

(56) Entgegenhaltungen:
EP-A- 0 860 631          FR-A- 2 822 214
US-B1- 6 389 919

• **PATENT ABSTRACTS OF JAPAN Bd. 2003, Nr. 01, 14. Januar 2003 (2003-01-14) -& JP 2002 257230 A (AISIN AI CO LTD), 11. September 2002 (2002-09-11)**

**Beschreibung**

Die Erfindung betrifft eine Stelleinheit zur automatisierten Betätigung eines Schaltgetriebes.

Eine derartige Stelleinheit ist aus der DE 197 34 023 A1 bekannt. Die dort offenbarte Stelleinheit umfasst eine Antriebseinheit mit einer Antriebswelle, eine Schaltwelle und ein Untersetzungsgetriebe. An der Schaltwelle sind drehfest ein Schaltfinger und drehfest ein Schaltkonnektor befestigt. Das Untersetzungsgetriebe überträgt eine Drehung der Antriebswelle auf die Schaltwelle. Dabei stehen der Schaltkonnektor und ein drehbares Segment des Untersetzungsgetriebes miteinander in Eingriff. Des Weiteren stehen der Schaltfinger und eine Schaltgabel miteinander in Eingriff, so dass bei einer Drehung der Antriebswelle die Schaltgabel verschoben wird. Das Untersetzungsverhältnis weist ein Schneckengetriebe auf, wobei die Antriebswelle eine Schnecke trägt, welche ein Schneckenrad kämmt. Mit dem Schneckenrad ist ein Zahnrad drehfest verbunden. Der an der Schaltwelle drehfest befestigte Schaltkonnektor weist einen gezahnten Kreisbogen eines zur Schaltwelle koaxiales Kreises auf. Der Kreisbogen und das Zahnrad stehen in Eingriff. Dadurch ist das Untersetzungsverhältnis zwischen Antriebswelle und Schaltwelle festgelegt und ist unabhängig von der Winkelstellung der Schaltwelle konstant.

Soll nun ein Gang geschaltet bzw. eingelegt werden, muss die Schaltwelle gedreht werden. Dazu wird die Antriebeinheit von einer Kontrolleinheit angesteuert, um die Antriebswelle und somit die Schaltwelle in Drehung zu versetzen. Bei einem üblichen Schaltvorgang, beispielsweise beim Schalten vom dritten in den vierten Gang, kann die Bewegung der Schaltwelle in drei Phasen unterteilt werden: in der ersten Phase wird der eingelegte Gang (im gewählten Beispiel der dritte Gang) ausgerückt (Ausrückphase). Dies ist mit einer Drehung der Schaltwelle von einem Winkel $\varphi_{Start}$ kleiner null bis zu einem Winkel $\varphi_{Sync}$ ungefähr gleich null verbunden. In der zweiten Phase, der sogenannten Synchronisationsphase, steht die Schaltwelle still beziehungsweise dreht sich nur sehr langsam. In der dritten Phase dreht sich die Schaltwelle von dem Winkel $\varphi_{Sync}$ gleich null auf einen Winkel $\varphi_{Ende}$ größer null, um den gewünschten Gang, hier den vierten Gang, einzulegen (Einlegphase).

In der Ausrückphase und in der Einlegphase ist ein vergleichsweise niedriges Drehmoment zur Drehung der Schaltwelle notwendig. In der zweiten Phase hingegen muss die Schaltwelle ein größeres Drehmoment übertragen, um die Kraft für die Synchronisation aufzubringen. Aufgrund weiterer, hier nicht näher einzugehenden Randbedingungen ist es wichtig, den Übergang von der Ausrückphase in die Synchronisationsphase so genau wie möglich festzulegen.

Zwar kann durch Wahl eines großen Untersetzungsverhältnisses zwischen Antriebseinheit und Schaltwelle sichergestellt werden, dass bei gegebener Leistung der Antriebseinheit das bereitzustellende Drehmoment an der Schaltwelle in der zweiten Phase groß genug ist. Dies führt jedoch zu längeren Schaltzeiten in der ersten und dritten Phase, da bei einer hohen Untersetzung und gegebener Maximaldrehzahl der Antriebswelle die Schaltwelle sich nur langsam dreht. Diese gegenläufigen Anforderungen an das Drehmoment und die Schaltgeschwindigkeit in den unterschiedlichen Schaltphasen gestalten die Steuerung der Antriebseinheit schwierig. Die Antriebseinheit ist dabei hohen Belastungen ausgesetzt, da deren Antriebswelle innerhalb eines Schaltvorgangs mehrmals stark beschleunigt und abgebremst wird.

In der JP 2002257230 A ist eine gattungsgemäße Stelleinheit zur automatisierten Betätigung eines Schaltgetriebes offenbart, die eine Antriebseinheit mit einer Antriebswelle und eine Schaltwelle aufweist, an der ein Schaltfinger und ein Schaltkonnektor drehfest befestigt sind. Dabei überträgt der Schaltkonnektor eine Drehung der Antriebswelle auf die Schaltwelle und der Schaltfinger führt eine Schaltgabel, sodass bei einer Drehung der Antriebswelle die Schaltgabel durch den Schaltfinger verschoben wird. Zwischen Antriebswelle und Schaltgabel ist eine Drehverbindung mit einem antreibenden Drehteil und einem angetriebenen Drehteil angeordnet, bei der das antreibende Drehteil eine sich in der Drehebene erstreckende Nut aufweist, in die ein Kopf des angetriebenen Drehteils greift, der bei Drehung des antreibenden Drehteils von der Nut geführt wird und sich auf einer Kreisbahn um die Drehachse des angetriebenen Drehteils bewegt. Damit ändern sich je nach Winkelstellung der relative Wirkradius von angetriebenem und abgetriebenem Drehteil, so daß ein automatisierter Schaltvorgang mit genügend hohem Drehmoment in der Synchronisationsphase ermöglicht wird. Bei konstanter Antriebsdrehzahl ist die resultierende Geschwindigkeit der Schaltgabel damit jedoch nur bedingt steuerbar.

Aufgabe der Erfindung ist es daher, eine Stelleinheit bereitzustellen, bei der die Schaltgabel während des Schaltvorganges abwechselnd langsamer und schneller bei gleicher Drehgeschwindigkeit der Antriebseinheit bewegt werden kann.

Diese Aufgabe wird dadurch gelöst, dass zwischen Antriebswelle und Schaltgabel wenigstens ein Schalthebel mit einem angetriebenen Arm und einem antreibenden Arm angeordnet, wobei der angetriebene Arm einen Kopf aufweist, der in eine Nut eines den Schalthebel antreibenden Drehteils ragt. Dieses antreibende Drehteil kann beispielsweise das oben erwähnte drehbare Segment des Untersetzungsgetriebes sein. Der Schalthebel ist um eine Drehachse drehbar gelagert, die vorzugsweise parallel zur Schaltwelle und parallel zur Antriebswelle verläuft.

Gattungsgemäß ist zwischen der Antriebswelle und der Schaltgabel wenigstens eine Drehverbindung mit einem antreibenden Drehteil und einem angetriebenen Drehteil vorgesehen, bei der das antreibende Drehteil eine in der Drehebene liegende Nut aufweist, in die ein Kopf des angetriebenen Drehteils greift, der bei Drehung des antreibenden Drehteils von der Nut geführt wird und sich auf einer Kreisbahn um die Drehachse des angetriebenen Drehteils bewegt..

Dreht sich das antreibende Drehteil mit seiner Nut in eine Richtung, drückt eine längsseitige Begrenzungswand der Nut den Kopf des anderen Drehteils in Umfangsrichtung des antreibenden Drehteils. Dieser Umfangsrichtung folgt der Kopf auf der Kreisbahn, die durch einen konstanten Abstand des Kopfes des angetriebenen Drehteils zu seiner Drehachse festgelegt werden kann. Als Folge wird der Kopf nicht nur mit der Nut um die Drehachse des antreibenden Drehteils gedreht, sondern bewegt sich, seiner Kreisbahn folgend, entlang der Nut des antreibenden Drehteils.

Aufgrund der Führung durch die Nut und der festgelegten Kreisbahn des Kopfes lässt sich für jede Winkelstellung oder für jeden Winkel $\varphi_{Antrieb}$ des antreibenden Drehteils eine Winkelstellung oder ein Winkel $\varphi_{Abtrieb}$ des angetriebenen Drehteils zuordnen. Die Funktion des Winkels des angetriebenen Drehteils $\varphi_{Abtrieb} = F(\varphi_{Antrieb})$ lässt sich als trigonometrische Funktion darstellen, in die der Abstand der Drehachsen der beiden Drehteile zueinander (Abstand $A_G$) sowie der Abstand des Kopfes von der Drehachse des angetriebenen Drehteils (Abstand $A_K$) als Parameter eingehen.

Geht man von einer Stellung der beiden Drehteile aus, bei der der Kopf des angetriebenen Drehteils genau zwischen den beiden Drehachsen der Drehverbindung liegt, das heißt, sich mit einem Kopfmittelpunkt auf der Verbindungsgeraden der Drehachsen befindet, und bei der der Winkel des antreibenden Drehteils $\varphi_{Antrieb}$ sowie der Winkel des angetriebenen Drehteils $\varphi_{Abtrieb}$ jeweils gleich null sein sollen, ist die Übertragungsfunktion $\varphi_{Abtrieb} = F(\varphi_{Antrieb})$ für Winkel $\varphi_{Antrieb}$ in einem technisch sinnvollen Bereich eine monoton steigende Funktion, deren erste Ableitung für Winkel $\varphi_{Antrieb}$ gleich null ein lokales Minimum aufweist. Dies führt zu einem nicht-konstanten Übertragungsverhältnis $\Delta\varphi_{Abtrieb}/\Delta\varphi_{Antrieb}$ zwischen den beiden Drehteilen und somit zu einem nicht-konstanten Übertragungsverhältnis $\Delta x_{Schaltgabel}/\Delta\varphi_{Antriebswelle}$ zwischen Antriebswelle und Schaltgabel.

Das nicht-konstante Übertragungsverhältnis der Drehverbindung wird nun derart in der Stelleinheit genutzt, dass in einer Phase des Schaltvorgangs, in der die Schaltgabel in kurzer Zeit einen langen Weg zurücklegen soll, die Drehverbindung möglichst große Winkel $\varphi_{Antrieb}$, $\varphi_{Abtrieb}$ aufweist. Hingegen sind die Winkel $\varphi_{Antrieb}$, $\varphi_{Abtrieb}$ in der Phase klein beziehungsweise gleich null, in der die Geschwindigkeit der Schaltgabel möglichst gering sein soll. Dies führt dazu, dass, um einen bestimmten Schaltvorgang zu realisieren, die Antriebseinheit gegenüber einer Stelleinheit mit (quasi-) konstantem Übertragungsverhältnis weniger stark belastet wird und die Steuerung der Antriebseinheit weniger aufwendig arbeiten kann. Daraus resultieren Vorteile hinsichtlich der Schaltzeiten, der Schaltqualität sowie der Lebensdauer der Antriebseinheit und der Kontrolleinheit.

Vorzugsweise nimmt der Abstand zwischen der Drehachse des antreibenden Drehteils und dem Kopf des angetriebenen Drehteils in einer Neutralstellung der Schaltwelle ein Minimum ein. In dieser Stellung sind, wie oben bereits ausgeführt, die Winkel $\varphi_{Antrieb}$, $\varphi_{Abtrieb}$ gleich null, sodass das nicht-konstante Übertragungsverhältnis $\Delta\varphi_{Abtrieb}/\Delta\varphi_{Antrieb}$ in der Neutralstellung der Schaltwelle den kleinsten Wert annimmt. In der Neutralstellung befindet sich die Schaltwelle in der Synchronisationsphase, bei der vergleichsweise hohe Drehmomente für die Synchronisation notwendig sind. Da das Übertragungsverhältnis in der Neutralstellung minimal ist, kann bei gegebener Maximalleistung der Antriebseinheit das höchste Antriebsmoment an der Schaltwelle bereitgestellt werden.

Vorzugsweise sind Nut und Kopf der Drehverbindung jeweils achsensymmetrisch ausgebildet, wobei die jeweiligen Symmetrieachsen in der Neutralstellung der Schaltwelle aufeinanderliegen. Dies führt zu einer Drehverbindung, die ein Übertragungsverhalten zeigt, das unabhängig von der Schaltrichtung des Schaltvorgangs ist. So ist es unerheblich, ob vom dritten in den viertem Gang geschaltet wird oder umgekehrt.

In einem bevorzugten Ausführungsbeispiel weist der Kopf in der Drehebene einen kreisrunden Querschnitt auf, wobei der Durchmesser des Kopfes, abgesehen von einem notwendigen Spiel, der Breite der Nut entspricht. In diesem Ausführungsbeispiel ist das Spiel zwischen Kopf und Nut so gering, dass die Drehverbindung praktisch direkt anspricht, auch wenn sie zuvor in eine andere Richtung gedreht worden ist. Um beim Schaltvorgang die Flächenpressung auf den Kopf in Grenzen zu halten, kann der Kopf eine zylindrische Form annehmen. Eine Mantelfläche des Kopfes bildet dann zusammen mit der anliegenden Begrenzungswand der Nut eine Kontaktl i-nie.

In der Neutralstellung der Schaltwelle ist in einem bevorzugten Ausführungsbeispiel der Abstand zwischen dem Kopf und der Drehachse des angetriebenen Drehteils größer als der Abstand zwischen dem Kopf und der Drehachse des antreibenden Drehteils. Mit anderen Worten: In der Neutralstellung liegt der Kopf des angetriebenen Drehteils näher an der Drehachse des antreibenden Drehteils als an der eigenen Drehachse. Eine derartige Anordnung stellt sicher, dass bei einem Winkel $\phi_{Antrieb}$ gleich null die Drehgeschwindigkeit des angetriebenen Drehteils kleiner ist als die Drehgeschwindigkeit des antreibenden Drehteils. Eine derartige Untersetzung dient bei gegebener Leistung der Antriebseinheit der Bereitstellung eines hohen Drehmoments beziehungsweise der Bereitstellung einer hohen Kraft für die Synchronisation.

Des weiteren ergibt sich ein weiterer Vorteil, wenn in Neutralstellung der Kopf näher an der Drehachse des antreibenden Drehteils als an der Drehachse des angetriebenen Drehteils liegt. Durch eine derartige Anordnung lassen sich bezogen auf das Übertragungsverhältnis in der Neutralstellung relativ höhere Übertragungsverhältnisse für große Winkel $\phi_{Antrieb}$ ungleich null darstellen. Durch Wahl der Lage des Kopfes zwischen den beiden Drehachsen lässt sich somit das Maß der Abweichung von einem konstanten Übertragungsverhältnis einstellen. Des weiteren wird durch die Lage des Kopfes zwischen den beiden Drehachsen der Drehwinkel festgelegt, um den sich das antreibende Drehteil drehen muss, damit das angetriebene Drehteil eine für den Schaltvorgang notwendige Drehung vollzieht. Ein kleinerer Abstand zwischen Kopf und Drehachse des antreibenden Drehteils bei gegebenem Abstand der Drehachsen der Drehteile zueinander führt dabei zu einem größer werdenden Drehwinkel, um den sich das antreibende Drehteil drehen muss.

Die Drehverbindung mit dem antreibenden Drehteil und dem angetriebenen Drehteil lässt sich an unterschiedlichen Stellen in der Stelleinheit einbringen. In einem Ausführungsbeispiel weist die Stelleinheit ein herkömmliches Untersetzungsgetriebe auf, das zwischen Antriebswelle und Schaltkonnektor geschaltet ist. Das Untersetzungsgetriebe umfasst dabei ein drehbares Segment, in das eine Nut eingearbeitet ist. Vorzugsweise erstreckt sich die Nut innerhalb der Drehebene des drehbaren Segments von der Drehachse aus in radialer Richtung. In diese Nut greift ein Kopf des an der Schaltwelle drehfest angebrachten Schaltkonnektors. In diesem Ausführungsbeispiel bildet das drehbare Segment das antreibende Drehteil, während der Schaltkonnektor das angetriebene Drehteil der Drehverbindung darstellt.

Um eine möglichst langsame Bewegung der Schaltgabel in der Neutralstellung zu erhalten, gleichzeitig aber die Schaltgeschwindigkeit am Anfang und am Ende des Schaltvorgangs zu erhöhen, weist der antreibende Arm des Schalthebels eine Nut auf, in die ein Kopf eines vom Schalthebel angetriebenen Drehteils ragt. Dadurch sind zwischen Antriebswelle und Schaltgabel zwei Drehverbindungen geschaltet, wobei der Winkel $\varphi_{Abtrieb,1}$ der ersten Drehverbindung den Winkel $\varphi_{Antrieb,2}$ der zweiten Drehverbindung darstellt. In diesem Fall sind die den einzelnen Drehverbindungen zuzuordnenden Übertragungsfunktionen zu verschachteln, um die Gesamt-Übertragungsfunktion zwischen dem Antriebswinkel $\varphi_{Antrieb,1}$ der ersten Drehverbindung und dem Abtriebswinkel $\varphi_{Abtrieb,2}$ der zweiten Drehverbindung zu erhalten.

In einem bevorzugten Ausführungsbeispiel schließen die beiden Arme des in sich starren Schalthebels einen Winkel von 90 Grad ein, stehen also in einem rechten Winkel zueinander. Je nach zur Verfügung stehendem Raum oder der Anordnung von Antriebswelle und Schaltwelle kann auch ein anderer Winkel von den beiden Armen des Schalthebels eingeschlossen werden. Es ist auch möglich, dass die beiden Arme sich in zwei entgegengesetzte Richtungen erstrecken und somit auf einer Geraden liegen.

Der Schalhebel kann zwischen dem drehbaren Segment des Untersetzungsgetriebes und dem Schaltkonnektor vorgesehen sein. In diesem Ausführungsbeispiel greift der Kopf des angetriebenen Armes des Schalthebels in die Nut des drehbaren Seg mentes des (linearen) Untersetzungsgetriebes. Dabei kann der Kopf des Schaltkonnektors von der Nut des antreibenden Arms des Schalthebels geführt werden. Somit sind zwischen dem Untersetzungsgetriebe und der Schaltwelle zwei Drehverbindungen mit jeweils nicht-linearer Übertragungsfunktion geschaltet.

In einem bevorzugten Ausführungsbeispiel weist der an der Schaltwelle drehfest befestigte Schaltfinger einen Kopf auf, der in eine Nut der Schaltgabel greift. Die Breite der Nut entspricht in etwa dem Durchmesser des vorzugsweise im Querschnitt runden Kopfes. Wird die Schaltwelle gedreht, übt der in Drehung versetzte Kopf auf die Nut eine Kraft aus. Da die Nut fest mit der Schaltgabel verbunden ist und die Schal t-gabel linear geführt ist, wird durch Drehung des Kopfes die Schaltgabel verschoben. Der Weg der Schaltgabel in Abhängigkeit des Drehwinkels der Schaltwelle lässt sich mit Hilfe der Sinus-Funktion berechnen, wobei als Bezugslänge der Abstand des Kopfes zur Drehachse der Schaltwelle einzusetzen ist.

Alternativ kann der Schaltfinger eine Nut aufweisen, in die ein entsprechend ausgebildeter, vorzugsweise im Querschnitt runder Kopf der Schaltgabel greift. In diesem Fall lässt sich der Weg der Schaltgabel in Abhängigkeit des Drehwinkels der Schaltwelle mit Hilfe der Tangens-Funktion und dem Abstand des Kopfes zur Drehachse der Schaltwelle quer zur Bewegungsrichtung der Schaltgabel berechnen.

Anhand der in den Figuren dargestellten Ausführungsformen wird die Erfindung näher beschrieben. Es zeigen:

Fig. 1    ein erstes Ausführungsbeispiel einer Stelleinheit ;

Fig. 2    ein zweites Ausführungsbeispiel einer Stelleinheit;

Fig. 3    ein drittes Ausführungsbeispiel einer Stelleinheit;

Fig. 4    ein viertes Ausführungsbeispiel der erfindungsgemäßen Stelleinheit;

Fig. 5    ein fünftes Ausführungsbeispiel der erfindungsgemäßen Stelleinheit;

Fig. 6    eine Darstellung der Geometrie einer Drehverbindung, wie sie in den Ausführungsbeispielen der Figuren 1 und 5 verwendet wird;

Fig. 7    die Funktion des Drehwinkels eines angetriebenen Drehteils in Abhängigkeit des Drehwinkels eines antreibenden Drehteils;

Fig. 8    die Funktion des Drehwinkels einer Schaltwelle der Stelleinheit der Fig. 4 in Abhängigkeit des Drehwinkels eines drehbarem Segments; und

Fig. 9    das Übertragungsverhältnis zwischen dem Segment und einer Schaltgabel in Abhängigkeit des Schaltweges.

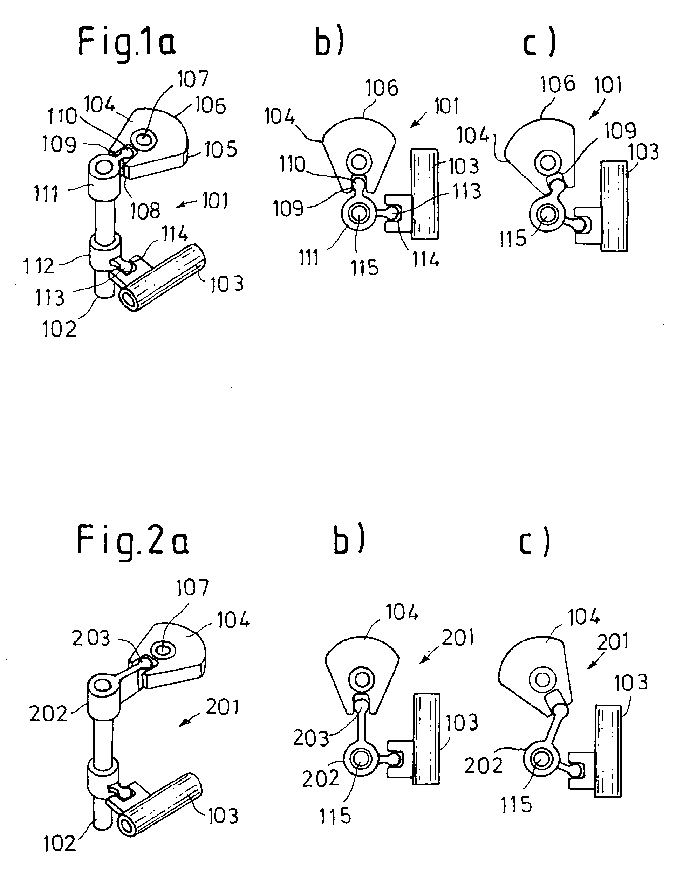

In den Fig. 1 bis 5 werden jeweils unterschiedliche Ausführungsbeispiele einer Stelleinheit 101, 201, 301, 401, 501 gezeigt. In den Fig. 1a bis 5a ist die jeweilige Stelleinheit perspektivisch dargestellt. Die Fig. 1b bis 5b zeigen die jeweilige Stelleinheit in einer Draufsicht, wobei sich jeweils eine Schaltwelle 102 in einer Neutralstellung befindet. Die Fig. 1c bis 5c zeigen die jeweiligen Stelleinheiten mit ihren einzelnen Komponenten in einer Stellung, bei der jeweils eine Schaltgabel 103 um einen jeweils gleichen Schaltweg von 8, 5 mm bezogen auf die in den Fig. 1b bis 5b gezeigten Position verschoben ist. Diese in den Fig. 1c bis 5c gezeigte Position der Schaltgabel korrespondiert mit einem eingelegten Gang.

Angetrieben wird die Stelleinheit 101 der Fig. 1a bis 1c von einer Antriebseinheit, die nicht dargestellt ist. Bei der Antriebseinheit kann es sich um übliche Antriebe wie beispielsweise einen Gleichstrommotor handeln. Die Antriebseinheit steht mit einem drehbaren Segment 104 in Eingriff, wobei eine auf einer Antriebswelle (nicht dargestellt) sitzende Schnecke und eine Verzahnung 105 an einem kreisbogenförmigen Stirnende 106 des drehbaren Segments 104 ein Schneckengetriebe bilden. Das Schneckengetriebe dient dazu, die Drehgeschwindigkeit der Antriebswelle in eine kleinere Drehgeschwindigkeit des Segments 104 um seine Drehachse 107 zu überführen.

An einem dem kreisbogenförmigen Stirnende 106 gegenüberliegenden Ende 108 des Segments 104 ist eine gerade Nut 109 ausgebildet, deren Längsachse sich radial von der Drehachse 107 des Segments 104 weg erstreckt und in der Drehebene des Segmentes 104 liegt. Die Nut 109 ist zum Ende 108 hin offen. In die Nut 109 greift ein Kopf 110 eines drehfest an der Schaltwelle 102 befestigten Schaltkonnektors 111. Der hier als Zylinder ausgebildete Kopf 110 weist einen kreisförmigen Querschnitt auf, wobei der Durchmesser des Kopfes der Breite der Nut 109 entspricht.

In axialer Richtung von dem Schaltkonnektor 111 beabstandet ist an der Schaltwelle 102 ein Schaltfinger 112 drehfest befestigt, der mit einem Kopf 113 in eine Nut 114 der Schaltgabel 103 greift. Treibt die nicht dargestellte Antriebseinheit nun das drehbare Segment 104 an, wird mittels des Schaltkonnektors 111 die Schaltwelle 102 und somit auch den Schaltfinger 112 um die Drehachse der Schaltwelle gedreht. Durch die Drehung des Schaltfingers 112 mit seinem im Querschnitt runden Kopf 113 wird die Schaltgabel linear verschoben. Wie der Fig. 1c zu entnehmen ist, wird ausgehend von der in Fig. 1b dargestellten Position bei einer Drehung des Segmentes 104 um einen Winkel von 23, 1° die Schaltgabel 103 um 8,5 mm verschoben. Mit anderen Worten: Für einen Schaltweg der Schaltgabel 103 von 8, 5 mm ist eine Drehung des drehbaren Segments von 23,1° notwendig. Das drehbare Segment 104 und der Schaltkonnektor 111 bilden eine Drehverbindung, bei der das antreibende Drehteil, hier das Segment 104, eine sich in der Drehebene erstreckende Nut aufweist, in die ein Kopf des angetriebenen Drehteils, hier der Kopf 110 des Schaltkonnektors 111 ragt, wobei durch Drehung des antreibenden Drehteils der Kopf 110 von der Nut 109 des Segments 104 geführt wird und entlang dieser verschoben wird (vgl. Fig. 1b und Fig. 1c).

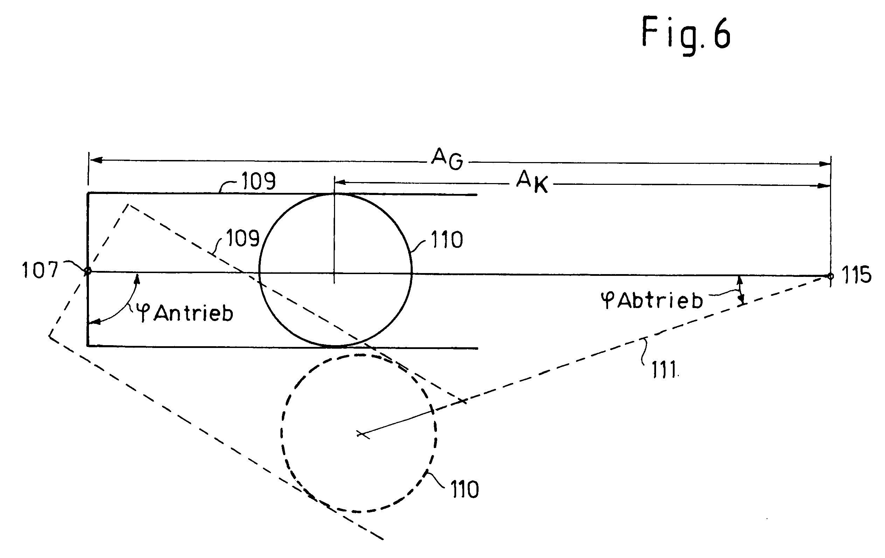

Fig. 6 zeigt schematisch die Geometrie der Drehverbindung zwischen Segment 104 und Schaltkonnektor 111, wobei zwei verschiedene Winkelstellungen dargestellt sind. Fig. 6 zeigt die Nut 109 sowie den kreisrunden Kopf 110 des Schaltkonnektors 111. Wird die Nut 109 um einen Winkel $\varphi_{Antrieb}$ um die Drehachse 107 gedreht, führt dies aufgrund der Wirkverbindung zwischen Nut 109 und Kopf 110 zu einem Winkel $\varphi_{Abtrieb}$, um den sich der Schaltkonnektor 111 um die Drehachse 115 der in Fig. 6 nicht dargestellten Schaltwelle 102 dreht. Aus folgender Gleichung, die sich aus der Geometrie der Drehverbindung der Fig. 6 ergibt, lässt sich die Funktion des Winkels $\varphi_{Abtrieb}$ in Abhängigkeit des Winkel $\varphi_{Antrieb}$ herleiten:

$$\tan \varphi_{Antrieb} = A_K \sin \varphi_{Abtrieb} / (A_G - A_K \cos \varphi_{Antrieb})$$

mit

$A_G$    Abstand der beiden Drehachsen 107, 115 zueinander; und
$A_K$    Abstand des Kopfes 110 zu Drehachse 115.

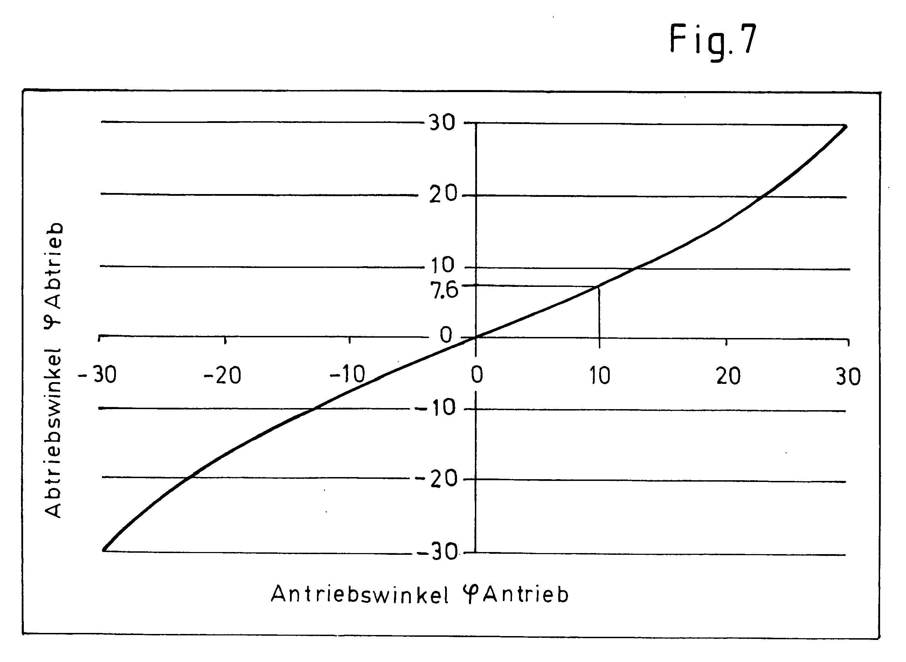

Fig. 7 zeigt den Winkel $\varphi_{Abtrieb}$ in Abhängigkeit des Winkels $\varphi_{Antrieb}$ in einem Bereich von -30 ° bis +30° für die in Fig. 1 dargestellten Verhältnisse. Dreht sich beispielsweise das Segment 104 mit der Nut 109 um 10°, wird die Schaltwelle um 7,6° gedreht. Wie zu erkennen, weist die Funktion $\varphi_{Abtrieb} = F(\varphi_{Antrieb})$ im Bereich kleiner Winkel $\varphi_{Antrieb}$ die kleinste Steigung auf, was bedeutet, dass in diesem Bereich das Verhältnis der Drehgeschwindigkeit des antreibenden Drehteils zur Drehgeschwindigkeit des angetriebenen Drehgeschwindigkeit klein ist. Mit größer werdendem Winkel wird auch die Steigung der Kurve größer: Das Übertragungsverhältnis steigt. Ein derartiges Verhalten wirkt sich bei der Stelleinheit 101 für den oben beschriebenen Schaltvorgang günstig: Es ergeben sich geringe Schaltgeschwindigkeiten bei kleinen Drehwinkeln in der Synchronisationsphase und größere Schaltgeschwindigkeiten beim Ausrücken und Einlegen der Gänge.

Die Fig. 2a bis 2c zeigen ein zweites Ausführungsbeispiel. Eine Stelleinheit 201 unterscheidet sich von der in der Fig. 1 gezeigten Stelleinheit durch einen anders ausgebildeten Schaltkonnektor 202. Bauteile der Stelleinheit 201, die zu den Bauteilen der Stelleinheit 101 identisch sind beziehungsweise deren Modifikation in der Figurenbeschreibung nicht beschrieben werden, werden mit entsprechend gleichen Bezugszeichen bezeichnet und nicht noch mal gesondert beschrieben. Dies soll sinngemäß auch für die Beschreibung der weiteren Ausführungsformen gelten.

Bei dem Schaltkonnektor 202 ist der Abstand eines Kopfes 203 von der Drehachse 115 der Schaltwelle 102 ca. um den Faktor 2 größer als der entsprechende Abstand bei der Stelleinheit 101 der Fig. 1. Darüber hinaus ist in Neutralstellung der Schaltwelle 102 der Kopf 203 des Schaltkonnektors 202 im Vergleich zur Stelleinheit 101 etwas weiter von einer Drehachse 107 des drehbaren Segments 104 beabstandet. Diese Änderungen in der Geometrie bewirken, dass sich bei gleichem Schaltweg von 8,5 mm das Segment 104 um 31,3 ° gedreht werden muss. Die Funktion $\varphi_{Abtrieb}$ = F ($\varphi_{Antrieb}$) der Drehverbindung zwischen Schaltkonnektor 202 und Segment 104 weist grundsätzlich den gleichen Verlauf auf wie die in Fig. 6 gezeigte Funktion. Sie verläuft jedoch flacher, das heißt, die Drehgeschwindigkeit des antreibenden Drehteils wird in einem stärken Maße auf eine geringere Drehgeschwindigkeit des angetriebenen reduziert.

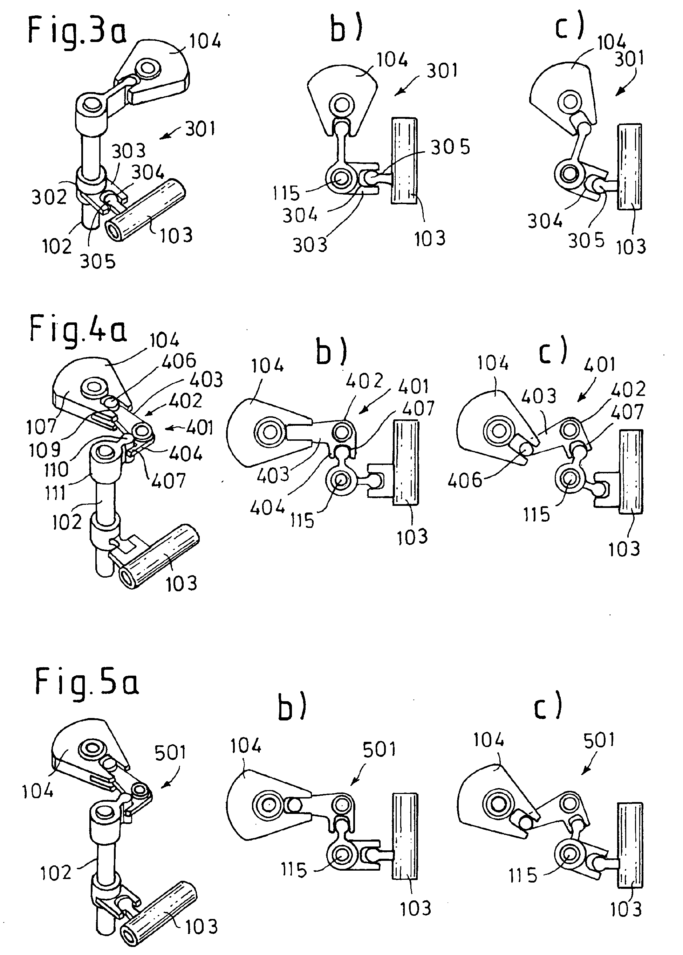

Das Ausführungsbeispiel der Fig. 3, eine Stelleinheit 301, unterscheidet sich von der Stelleinheit 201 dadurch, dass die Verbindung zwischen Schaltfinger und Schaltgagabel umgekehrt ausgeführt ist. Die Stelleinheit 301 weist einen Schaltfinger 302 mit einer daran angeformten Gabel 303 auf, die eine Nut 304 bildet. In dieser Nut 304 kann sich ein Kopf 305 der verschiebbaren Schaltgabel 103 bewegen.

Wie der Fig. 3c zu entnehmen ist, wird für einen Schaltweg von 8,5 mm bei der Stelleinheit 301 eine Drehung des Segments 104 um 29,5° benötigt. Somit muss das Segment 104 gegenüber der Stelleinheit 201 der Fig. 2 im geringen Maße weniger weit gedreht werden, um den erforderlichen Schaltweg zu erreichen.

Bei der Verbindung zwischen Schaltfinger und Schaltgabel handelt es sich nicht um eine Drehverbindung zwischen zwei Drehteilen, sondern um eine Verbindung zwischen einem Drehteil (Schaltfinger) und einem verschiebbaren Teil (Schaltgabel). Daher lassen sich die Aussagen bezüglich der in Fig. 6 gezeigten Funktion nicht auf diese Verbindung übertragen. Für die Stelleinheiten 201 und 301 lässt sich der jeweilige Drehwinkel der Schaltwelle 102 berechnen, der notwendig ist, die Schaltgabel um 8,5 mm zu verschieben. Während der Drehwinkel bei der Stelleinheit 201 dem Arcsinus des Quotienten aus Schaltweg und Abstand zwischen Kopf 113 und Drehachse 115 der Schaltwelle entspricht, ist bei der Berechnung des notwendigen Drehwinkels bei der Stelleinheit 301 unter Berücksichtigung der umgekehrten Verbindung zumindest in guter Näherung der Arctangens des Schaltweges bezogen auf den Abstand zwischen Kopf 305 und Drehachse 115 in Neutralstellung der Schaltwelle zu Grunde zu legen. Da die Arcsin-Funktion bei gleichem Eingabewert stets größer ist als die Arctan-Funktion, muss dementsprechend die Schaltwelle 102 bei der Stelleinheit 202 weiter gedreht werden, was zu einem größeren Drehwinkel des Segments 104 führt.

Die Fig. 4a bis 4c zeigen ein weiteres Ausführungsbeispiel. Eine Stelleinheit 401 weist einen Schalthebel 402 mit einem angetriebenen Arm 403 und einem antreibenden Arm 404 auf. Der Schalthebel 402 ist um die Drehachse 405 drehbar gelagert. Die Drehachse 405 sowie die Drehachsen 115, 107 verlaufen parallel zueinander.

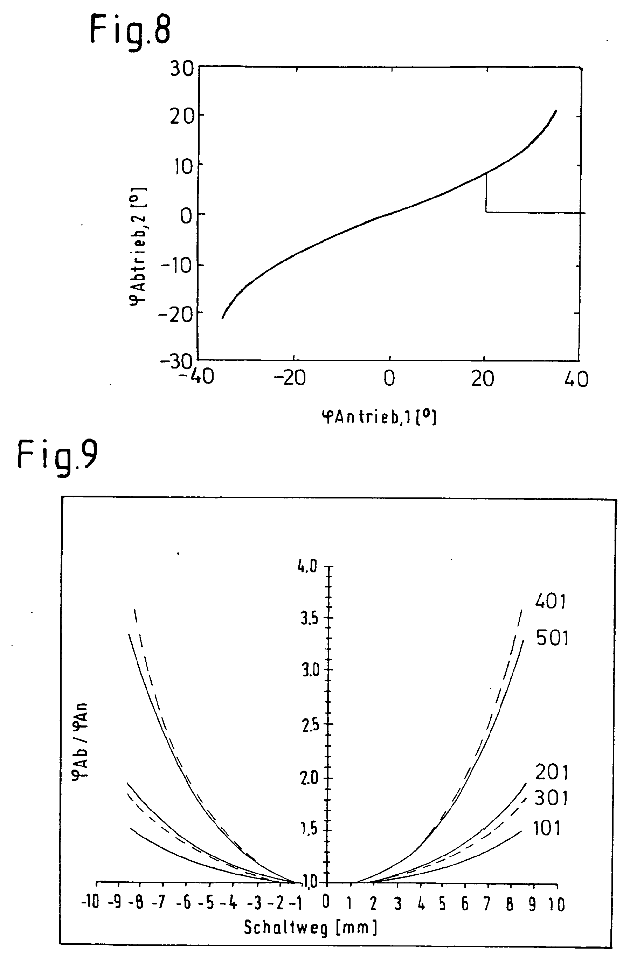

Der angetriebene Arm 403 weist einen Kopf 406 auf, der in die Nut 109 des Segments 104 greift. Somit bilden der angetriebene Arm 403 und das Segment 109 eine erste Drehverbindung. Der antreibende Arm 404 umfasst eine Nut 407, in die der bereits in der Fig. 1 beschriebene Kopf 110 des Schaltkonnektors 111 ragt. Somit wird eine zweite Drehverbindung definiert, die der ersten Drehverbindung nachgeschaltet ist. Durch eine derartige Schaltung sind die entsprechenden Funktionen zwischen den jeweiligen Antriebswinkeln $\varphi_{Antrieb,1}$, $\varphi_{Antrieb,2}$ und Abtriebswinkel $\varphi_{Abbtrieb,1}$, $\varphi_{Abbtrieb,2}$ ineinander einzusetzen, um eine Funktion zwischen dem Antriebswinkel $\varphi_{Antrieb,1}$ der ersten Drehverbindung und dem Abtriebswinkel $\varphi_{Abtrieb,2}$ zu erhalten. Die daraus resultierende Funktion ist in Fig. 8 dargestellt. Diese Funktion zeichnet sich dadurch aus, dass die Steigung der Kurve ausgehend von $\varphi_{Antrieb,1}$ = 0 gering ist, dann aber bei großen Winkeln stark ansteigt. Um den notwendigen Schaltweg von 8,5 mm zu realisieren, ist bei der Stelleinheit ein Drehwinkel von 34° notwendig.

In den Fig. 5a bis 5c ist eine weitere Stelleinheit 501 dargestellt. Sie unterscheidet sich von der Stelleinheit 401 in der Umkehrung von Nut und Kopf bei der Verbindung zwischen Schaltgabel und Schaltfinger. Hier gelten die gleichen Ansätze wie bei der Gegenüberstellung der Stelleinheiten 201 (Fig. 2) und 302 (Fig. 3). Folglich ist der notwendige Drehwinkel des Segments 104 bei der Stelleinheit 501 geringfügig kleiner.

In der Fig. 9 ist das Verhältnis zwischen der Drehgeschwindigkeit des Segments 104 und der Drehgeschwindigkeit der Schaltwelle 102 über dem Schaltweg der Schaltgabel 103 dargestellt. In der Neutralstellung (Schaltweg = 0 mm) wird das Verhältnis jeweils für jede Stelleinheit auf den Wert 1 normiert. Für die Stelleinheit 401 beispielsweise ändert sich das Verhältnis bis zu 3,6 bei eingelegtem Gang (Schaltweg +/- 8,5 mm). Dies bedeutet, dass am Ende der Schaltung die Schaltgeschwindigkeit um den Faktor 3,6 höher ist als in der Neutralstellung.

BEZUGSZEICHENLISTE

| | |
|---|---|
| 101 | Stelleinheit |
| 102 | Schaltwelle |
| 103 | Schaltgabel |
| 104 | Drehbares Segment |
| 105 | Verzahnung |
| 106 | Stirnseite |
| 107 | Drehachse |
| 108 | Ende |
| 109 | Nut |
| 110 | Kopf |
| 111 | Schaltkonnektor |
| 112 | Schaltfinger |
| 113 | Kopf |
| 114 | Nut |
| 115 | Drehachse |
| 201 | Stelleinheit |
| 202 | Schaltkonnektor |
| 203 | Kopf |
| 301 | Stelleinheit |
| 302 | Schaltfinger |
| 303 | Gabel |
| 304 | Nut |
| 305 | Kopf |
| 401 | Stelleinheit |
| 402 | Schalthebel |
| 403 | Angetriebener Arm |
| 404 | Antreibender Arm |
| 405 | Drehachse |
| 406 | Kopf |
| 407 | Nut |
| 501 | Stelleinheit |

**Patentansprüche**

1.	Stelleinheit (101, 201, 301, 401, 501) zur automatisierten Betätigung eines Schaltgetriebes, die eine Antriebseinheit mit einer Antriebswelle und eine Schaltwelle (102) aufweist, an der drehfest ein Schaltfinger (112, 302) und drehfest ein Schaltkonnektor (111, 202) befestigt sind, wobei der Schaltkonnektor (111, 202) eine Drehung der Antriebswelle auf die Schaltwelle (102) überträgt und der Schaltfinger (112, 302) eine Schaltgabel (103) führt, sodass bei einer Drehung der Antriebswelle die Schaltgabel (103) verschoben wird, wobei zwischen der Antriebswelle und der Schaltgabel (103) wenigstens eine Drehverbindung mit einem antreibenden Drehteil und einem angetriebenen Drehteil vorgesehen ist, bei der das antreibende Drehteil eine sich in der Drehebene erstreckende Nut (109, 407) aufweist, in die ein Kopf (110, 406) des angetriebenen Drehteils greift, der bei Drehung des antreibenden Drehteils von der Nut (109, 407) geführt wird und sich auf einer Kreisbahn um die Drehachse des angetriebenen Drehteils bewegt, **dadurch gekennzeichnet, dass** zwischen Antriebswelle und Schaltgabel (103) wenigstens ein Schalthebel (402) mit einem angetriebenen Arm (403) und einem antreibenden Arm (404) angeordnet ist, wobei der angetriebene Arm (403) einen Kopf (406) aufweist, der in eine Nut (109) eines den Schalthebel (402) antreibenden Drehteils greift und dabei die erste von wenigstens zwei Drehverbindungen bildet.

2.	Stelleinheit (101, 201, 301, 401, 501) nach Anspruch 1, **dadurch gekennzeichnet, dass** der Abstand zwischen der Drehachse des antreibenden Drehteils und dem Kopf (110, 406) des angetriebenen Drehteils in einer Neutralstellung der Schaltwelle (102) am kleinsten ist.

3.	Stelleinheit (101, 201, 301, 401, 501) nach Anspruch 2, **dadurch gekennzeichnet, dass** der Nut (109, 407) und dem Kopf (110, 406) jeweils achsensymmetrisch ausgebildet sind, wobei die jeweiligen Symmetrieachsen in der Neutralstellung der Schaltwelle (102) zusammenfallen.

4. Stelleinheit (101, 201, 301, 401, 501) nach einem der Ansprüche 1 bis 3, **dadurch gekennzeichnet, dass** der Kopf (110, 406) einen kreisrunden Querschnitt in der Drehebene aufweist, wobei der Durchmesser des Kopfes (110, 406) der Breite der Nut (109, 407) entspricht.

5. Stelleinheit (101, 201, 301, 401, 501) nach einem der Ansprüche 2 bis 4, **dadurch gekennzeichnet, dass** in der Neutralstellung der Schaltwelle (102) der Abstand zwischen dem Kopf (110, 406) des angetriebenen Drehteils und der Drehachse des angetriebenen Drehteils größer ist als der Abstand zwischen dem Kopf (110, 406) des angetriebenen Drehteils und der Drehachse des antreibenden Drehteils.

6. Stelleinheit (101, 201, 301, 401, 501) nach einem der Ansprüche 1 bis 5, **dadurch gekennzeichnet, dass** zwischen Antriebswelle und dem Schaltkonnektor (111, 202) ein Untersetzungsgetriebe geschaltet ist.

7. Stelleinheit (101, 201, 301, 401, 501) nach Anspruch 6, **dadurch gekennzeichnet, dass** ein drehbares Segment (104) des Untersetzungsgetriebes eine Nut (109) aufweist, in die ein Kopf (110) des Schaltkonnektors (111, 202) greift.

8. Stelleinheit (401, 501) nach einem der Ansprüche 1 bis 7, **dadurch gekennzeichnet, dass** der antreibende Arm (404) eine Nut (407) aufweist, in die ein Kopf eines vom Schalthebel (403) angetriebenen Drehteils greift.

9. Stelleinheit (401, 501) nach einem der Ansprüche 1 bis 8, **dadurch gekennzeichnet, dass** die beiden Arme des Schalthebels einen Winkel von 90 Grad bilden.

10. Stelleinheit (401, 501) nach einem der Ansprüche 1 bis 9, **dadurch gekennzeichnet, dass** der Kopf (406) des angetriebenen Arms (403) des Schalthebels (402) in die Nut (109) des drehenden Segments (104) des Untersetzungsgetriebes ragt und die Nut (407) des antreibenden Arms (404) des Schalthebels (402) einen Kopf (110) des Schaltkonnektors (111) aufnimmt.

11. Stelleinheit (401, 501) nach einem der Ansprüche 1 bis 10, **dadurch gekennzeichnet, dass** die Drehachsen der Antriebswelle, des Schalthebels (402) und der Schaltwelle (102) zueinander parallel verlaufen.

12. Stelleinheit (101, 201, 401) nach einem der Ansprüche 1 bis 11, **dadurch gekennzeichnet, dass** der Schaltfinger (112) einen Kopf (113) aufweist, der in eine Nut (114) der Schaltgabel (103) ragt.

13. Stelleinheit (301, 501) nach einem der Ansprüche 1 bis 11, **dadurch gekennzeichnet, dass** der Schaltfinger (302) eine Nut (304) aufweist, in die ein Kopf (305) der Schaltgabel (103) ragt.

## Claims

1. Actuating unit (101, 201, 301, 401, 501) for the automated actuation of a shift transmission, which actuating unit has a drive unit with a drive input shaft and a shift shaft (102) to which a shift finger (112, 302) and a shift connector (111, 202) are fastened in a rotationally fixed manner, with the shift connector (111, 202) transmitting a rotation of the drive input shaft to the shift shaft (102) and the shift finger (112, 302) guiding a shift fork (103) such that, during a rotation of the drive input shaft, the shift fork (103) is moved, with at least one rotary connection to a driving rotary part and a driven rotary part being provided between the drive input shaft and the shift fork (103), in which rotary connection the driving rotary part has a groove (109, 407) which extends in the plane of rotation and into which a head (110, 406) of the driven rotary part engages, which head (110, 406), during rotation of the driving rotary part, is guided by the groove (109, 407) and moves on a circular path around the rotational axis of the driven rotary part, **characterized in that** at least one shift lever (402) with a driven arm (403) and with a driving arm (404) is arranged between the drive input shaft and shift fork (103), with the driven arm (403) having a head (406), with said head (406) engaging into a groove (109) of a rotary part which drives the shift lever (402) and thereby forming the first of at least two rotary connections.

2. Actuating unit (101, 201, 301, 401, 501) according to Claim 1, **characterized in that** the spacing between the rotational axis of the driving rotary part and the head (110, 406) of the driven rotary part is at its smallest in a neutral position of the shift shaft (102).

3.  Actuating unit (101, 201, 301, 401, 501) according to Claim 2, **characterized in that** the groove (109, 407) and the head (110, 406) are in each case formed so as to be axially symmetrical, with the respective axes of symmetry intersecting in the neutral position of the shift shaft (102).

4.  Actuating unit (101, 201, 301, 401, 501) according to one of Claims 1 to 3, **characterized in that** the head (110, 406) has a circular cross section in the rotary plane, with the diameter of the head (110, 406) corresponding to the width of the groove (109, 407).

5.  Actuating unit (101, 201, 301, 401, 501) according to one of Claims 2 to 4, **characterized in that**, in the neutral position of the shift shaft (102), the spacing between the head (110, 406) of the driven rotary part and the rotational axis of the driven rotary part is greater than the spacing between the head (110, 406) of the driven rotary part and the rotational axis of the driving rotary part.

6.  Actuating unit (101, 201, 301, 401, 501) according to one of Claims 1 to 5, **characterized in that** a step-down gearing is connected between the drive input shaft and the shift connector (111, 202).

7.  Actuating unit (101, 201, 301, 401, 501) according to Claim 6, **characterized in that** a rotatable segment (104) of the step-down gearing has a groove (109) into which a head (110) of the shift connector (111, 202) engages.

8.  Actuating unit (401, 501) according to one of Claims 1 to 7, **characterized in that** the driving arm (404) has a groove (407) into which a head of a rotary part which is driven by the shift lever (402) engages.

9.  Actuating unit (401, 501) according to one of Claims 1 to 8, **characterized in that** the two arms of the shift lever form an angle of 90 degrees.

10.  Actuating unit (401, 501) according to one of Claims 1 to 9, **characterized in that** the head (406) of the driven arm (403) of the shift lever (402) projects into the groove (109) of the rotating segment (104) of the step-down gearing, and the groove (407) of the driving arm (404) of the shift lever (402) holds a head (110) of the shift connector (111).

11.  Actuating unit (401, 501) according to one of Claims 1 to 10, **characterized in that** the rotational axes of the drive input shaft, of the shift lever (402) and of the shift shaft (102) run parallel to one another.

12.  Actuating unit (101, 201, 401) according to one of Claims 1 to 11, **characterized in that** the shift finger (112) has a head (113) which projects into a groove (114) of the shift fork (103).

13.  Actuating unit (301, 501) according to one of Claims 1 to 11, **characterized in that** the shift finger (302) has a groove (304) into which a head (305) of the shift fork (103) projects.

**Revendications**

1.  Actionneur (101, 201, 301, 401, 501) pour l'actionnement automatisé d'une boîte de vitesses, qui présente une unité d'entraînement avec un arbre d'entraînement et un arbre de changement de vitesse (102), sur lequel sont fixés de manière solidaire en rotation un doigt de changement de vitesse (112, 302) et un connecteur de changement de vitesse (111, 202), le connecteur de changement de vitesse (111, 202) transmettant une rotation de l'arbre d'entraînement à l'arbre de changement de vitesse (102) et le doigt de changement de vitesse (112, 302) guidant une fourche de changement de vitesse (103), de sorte que dans le cas d'une rotation de l'arbre d'entraînement, la fourche de changement de vitesse (103) soit déplacée, entre l'arbre d'entraînement et la fourche de changement de vitesse (103) au moins une connexion rotative à une partie rotative d'entraînement et une partie rotative entraînée étant prévue, la partie rotative d'entraînement présentant une rainure (109, 407) s'étendant dans le plan de rotation, dans laquelle une tête (110, 406) de la partie rotative entraînée vient en prise, est guidée lors de la rotation de la partie rotative d'entraînement par la rainure (109, 407) et se déplace sur une piste circulaire autour de l'axe de rotation de la partie rotative entraînée,
    **caractérisé en ce que**
    entre l'arbre d'entraînement et la fourche de changement de vitesse (103) on dispose au moins un levier de changement de vitesse (402) avec un bras entraîné (403) et un bras d'entraînement (404), le bras entraîné (403) pré-

EP 1 596 103 B1

sentant une tête (406) qui vient en prise dans une rainure (109) d'une partie rotative entraînant le levier de changement de vitesse (402) et qui forme ainsi la première d'au moins deux connexions rotatives.

**2.** Actionneur (101, 201, 301, 401, 501) selon la revendication 1, **caractérisé en ce que** la distance entre l'axe de rotation de la partie rotative d'entraînement et la tête (110, 406) de la partie rotative entraînée est la plus petite dans une position neutre de l'arbre de changement de vitesse (102).

**3.** Actionneur (101, 201, 301, 401, 501) selon la revendication 2, **caractérisé en ce que** la rainure (109, 407) et la tête (110, 406) sont réalisées à chaque fois avec une symétrie axiale, les axes de symétrie respectifs coïncidant dans la position neutre de l'arbre de changement de vitesse (102).

**4.** Actionneur (101, 201, 301, 401, 501) selon l'une quelconque des revendications 1 à 3, **caractérisé en ce que** la tête (110, 406) présente une section transversale ronde circulaire dans le plan de rotation, le diamètre de la tête (110, 406) correspondant à la largeur de la rainure (109, 407).

**5.** Actionneur (101, 201, 301, 401, 501) selon l'une quelconque des revendications 2 à 4, **caractérisé en ce que** dans la position neutre de l'arbre de changement de vitesse (102), la distance entre la tête (110, 406) de la partie rotative entraînée et l'axe de rotation de la partie rotative entraînée est supérieure à la distance entre la tête (110, 406) de la partie rotative entraînée et l'axe de rotation de la partie rotative d'entraînement.

**6.** Actionneur (101, 201, 301, 401, 501) selon l'une quelconque des revendications 1 à 5, **caractérisé en ce qu'**entre l'arbre d'entraînement et le connecteur de changement de vitesse (111, 202) est montée une boîte de vitesses auxiliaire.

**7.** Actionneur (101, 201, 301, 401, 501) selon la revendication 6, **caractérisé en ce qu'**un segment rotatif (104) de la boîte de vitesses auxiliaire présente une rainure (109) dans laquelle vient en prise une tête (110) du connecteur de changement de vitesse (111, 202).

**8.** Actionneur (401, 501) selon l'une quelconque des revendications 1 à 7, **caractérisé en ce que** le bras d'entraînement (404) présente une rainure (407) dans laquelle vient en prise une tête d'une partie rotative entraînée par le levier de changement de vitesse (402).

**9.** Actionneur (401, 501) selon l'une quelconque des revendications 1 à 8, **caractérisé en ce que** les deux bras du levier de changement de vitesse forment un angle de 90 degrés.

**10.** Actionneur (401, 501) selon l'une quelconque des revendications 1 à 9, **caractérisé en ce que** la tête (406) du bras entraîné (403) du levier de changement de vitesse (402) pénètre dans la rainure (109) du segment rotatif (104) de la boîte de vitesses auxiliaire et la rainure (407) du bras d'entraînement (404) du levier de changement de vitesse (402) reçoit une tête (110) du connecteur de changement de vitesse (111).

**11.** Actionneur (401, 501) selon l'une quelconque des revendications 1 à 10, **caractérisé en ce que** les axes de rotation de l'arbre d'entraînement, du levier de changement de vitesse (402) et de l'arbre de changement de vitesse (102) s'étendent parallèlement les uns aux autres.

**12.** Actionneur (101, 201, 401) selon l'une quelconque des revendications 1 à 11, **caractérisé en ce que** le doigt de changement de vitesse (112) présente une tête (113) qui pénètre dans une rainure (114) de la fourche de changement de vitesse (103).

**13.** Actionneur (301, 501) selon l'une quelconque des revendications 1 à 11, **caractérisé en ce que** le doigt de changement de vitesse (302) présente une rainure (304) dans laquelle pénètre une tête (305) de la fourche de changement de vitesse (103).

# Fig.1a

b)

c)

# Fig.2a

b)

c)

Fig.3a

b)

c)

Fig.4a

b)

c)

Fig.5a

b)

c)

# Fig.6

EP 1 596 103 B1

Fig.7

EP 1 596 103 B1

14

## Fig.8

## Fig.9

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19734023 A1
- JP 2002257230 A